(19) Europäisches Patentamt
European Patent Office
Office européen des brevets

(11) Veröffentlichungsnummer: **0 306 793 B1**

(12) **EUROPÄISCHE PATENTSCHRIFT**

(45) Veröffentlichungstag der Patentschrift: **11.11.92**

(51) Int. Cl.⁵: **H02K 5/26**, B60T 8/40

(21) Anmeldenummer: **88114066.9**

(22) Anmeldetag: **29.08.88**

(54) **Motoraufhängung mittels eines das Motorgehäuse umfassenden Bandes.**

(30) Priorität: **10.09.87 DE 3730456**

(43) Veröffentlichungstag der Anmeldung:
**15.03.89 Patentblatt 89/11**

(45) Bekanntmachung des Hinweises auf die
Patenterteilung:
**11.11.92 Patentblatt 92/46**

(84) Benannte Vertragsstaaten:
**DE FR GB IT SE**

(56) Entgegenhaltungen:
**CH-A- 152 690**    **DE-B- 1 043 485**
**DE-U- 8 517 399**    **DE-U- 8 628 193**
**GB-A- 268 497**    **GB-A- 506 774**
**GB-A- 770 102**    **US-A- 1 517 101**
**US-A- 1 794 817**    **US-A- 2 282 174**
**US-A- 2 750 137**    **US-A- 3 160 377**

(73) Patentinhaber: **SIEMENS AKTIENGESELL-
SCHAFT
Wittelsbacherplatz 2
W-8000 München 2(DE)**

(72) Erfinder: **Seuffert, Werner
Mainstrasse 9
W-8722 Bergrheinfeld(DE)**
Erfinder: **Müller, Hans-Joachim, Dipl.-Ing.
Schweinfurter Strasse 80
W-8722 Bergrheinfeld(DE)**

EP 0 306 793 B1

Rank Xerox (UK) Business Services

## Beschreibung

Die Erfindung bezieht sich auf eine Motoraufhängung mittels eines das Motorgehäuse umfassenden Bandes gemäß Oberbegriff des Anspruchs 1; eine derartige Motoraufhängung ist aus der CH-A-152 690 bekannt.

Bei einer durch die CH-A-152 690 bekannten Lichtmaschinenbefestigung ist das Band mit seinen Bandenden an einen mit Aufhängeösen versehenen Träger lösbar anschraubbar und zusammen mit dem Träger auf der Lichtmaschine derart festziehbar, daß die Lichtmaschine je nach Bedürfnis um ihre eigene Achse drehbar und in der Endstellung fixierbar ist.

Bei einer durch eine offenkundige Vorbenutzung bekannten Motoraufhängung mittels einer Metall-Schelle ist die mit ihren Schenkelenden teilweise das Motorgehäuse außen übergreifende Metall-Schelle am Motorgehäuse lagerichtig festgeschweißt. Am gehäuseabgewandten Ende der Metall-Schelle ist eine Aufhängungshülse angeschweißt, mittels welcher der Motor als Pumpenantriebsmotor am Gehäuse eines Antiblockier-Bremssystems in definiertem Abstand bzw. in definiertem Lagewinkel zu diesem befestigt ist.

Durch die GB-A-268 497 ist die Befestigung eines Rohres auf einem Grundkörper mittels einer das Rohr übergreifenden Feder-Schelle bekannt, die mit ihren freien Schenkelenden auf Nocken des Grundkörper aufrastbar ist; der Grundkörper ist mittels einer Schraubbefestigung an einem Träger gehalten.

Gemäß vorliegender Erfindung soll bei einfacher, insbesondere automatengerechter Fertigung und Montage ein Maximum an Flexibilität hinsichtlich der Aufhängung des Motors relativ zu seiner Aufnahme bei einem Minimum von dazu notwendigen unterschiedlichen Bauteilen gewährleistet werden können.

Die Lösung dieser Aufgabe gelingt bei einer Motoraufhängung der eingangs genannten Art erfindungsgemäß durch die Lehre des Anspruchs 1; vorteilhafte Ausgestaltungen der Erfindung sind jeweils Gegenstand der Unteransprüche.

Die erfindungsgemäße Motoraufhängung erlaubt im Baukastensystem mit z.B. einem einzigen Grundmotor eine Änderung des Aufhängungswinkels lediglich durch tangentiales Verschieben von Aufhängungsblock und Feder-Schelle bzw. eine Änderung des Aufhänge abstandes lediglich durch Austauschen der Traverse, wobei z.B. durch eine einfache Schnappverbindung ohne Notwendigkeit eines Schweißvorganges der Aufhängungsblock mit der Aufhängungshülse einerseits und die Feder-Schelle andererseits unter Umschließung des Motorgehäuses gegeneinander und gegen das Motorgehäuse festspannbar und in tangentialer Richtung formschlüssig lagefixierbar sind.

Vorteilhafterweise werden die Aufhängungshülse und die Traverse als einteiliges Spritzguß- bzw. Druckgußbauteil eines Aufnahmeblockes hergestellt. Eine besonders einfache und sichere Feder-Schelle ist dadurch gegeben, daß zur Erzielung eines Federzuges der Schenkelenden-Öffnung gegenüberliegend ein Federbügel im Zuge der Feder-Schelle vorgesehen ist. Um ein axiales gegenseitiges Verschieben des Aufnahmeblocks einerseits und der Feder-Schelle andererseits auch bei größeren Stoßbelastungen verhindern zu können, ist in vorteilhafter Weise vorgesehen, daß die freien Schenkelenden der Feder-Schelle mit Ausklinkungen versehen sind, in die im Sinne einer axialen Lagefixierung zwischen der Traverse und der Feder-Schelle Streben der Traverse eingreifen.

Im Sinne eines für verschiedene Aufhängungslagen einsetzbaren Universal-Motorgehäuses ist in vorteilhafter Weise das Motorgehäuse mit mehreren, durch Zahl und Position den unterschiedlichen Lagen des Aufnahmeblocks entsprechenden Vertiefungen bzw. Nocken versehen sind. Die radialen Vertiefungen lassen sich bei der Herstellung des Motorgehäuses bzw. der Feder-Schelle z.B. durch einen einfachen Prägevorgang herstellen.

Die Erfindung sowie weitere vorteilhafte Ausgestaltungen der Erfindung werden im folgenden anhand eines schematisch in der Zeichnung dargestellten Ausführungsbeispieles näher erläutert; darin zeigen:

FIG 1     eine axiale Draufsicht auf eine erfindungsgemäße Motoraufhängung;

FIG 2     die Motoraufhängung gemäß FIG 1 in Ansicht II;

FIG 3     im Detailausschnitt eine tangentiale Lagefixierung zwischen der Federschelle und dem Motorgehäuse durch einen in eine Vertiefung des Motorgehäuses eingreifenden Fixier-Nocken der Feder-Schelle;

FIG 4     den Ausschnitt gemäß FIG 3 in Ansicht IV;

FIG 5     im Detailausschnitt eine tangentiale Lagesicherung zwischen der Feder-Schelle und dem Motorgehäuse durch in eine Fixier-Öffnung der Feder-Schelle eingreifenden radial vorstehenden Fixier-Nocken des Motorgehäuses;

FIG 6     den Ausschnitt gemäß FIG 5 in Ansicht VI.

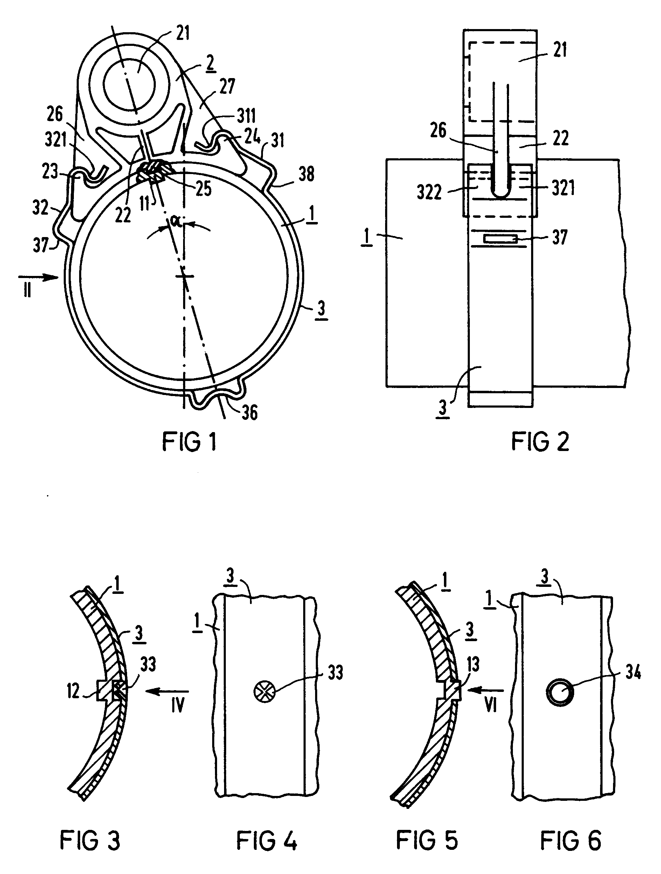

FIG 1,2 zeigen ein Motorgehäuse 1, an dem in einem von der senkrechten um den Winkel $\alpha$ abweichenden Aufhängungsebene ein Kunststoff-Aufhängungsblock 2 bestehend aus einer Aufhängungshülse 21 und einer Traverse 22 mittels einer das Motorgehäuse 1 in der unteren Hälfte umgreifenden Feder-Schelle 3 dadurch fest angedrückt ist, daß die Feder-Schelle 3 mit endseitig an ihren Schenkelenden 31,32 angeformten Klemm-Bügeln 311,321 hinter Klemm-Nocken 23,24 des Aufhängeblocks 2 eingreift.

Wie insb. aus FIG 2 ersichtlich, sind die Schenkelenden 31,32 mit einer mittigen endseitigen geöffneten Ausklinkung versehen, in die einstückig an den Aufhängungsblock angeformte Streben 26,27 formschlüssig eingreifen. Zur Erleichterung des Montagevorganges beim gegenseitigen Verrasten von Aufnahmeblocks 2 und Schenkelenden 31,32 ist die Feder-Schelle 3 mit seitlichen Montagestift-Öffnungen 37,38 versehen. Die Spannkraft der Feder-Schelle 3 wird durch einen der Schenkelenden-Öffnung gegenüberliegenden Federbügel 36 verstärkt.

Zur tangentialen formschlüssigen Lagesicherung zwischen dem Aufnahmeblock 2 und dem Motorgehäuse ist gemäß FIG 1,2 an der Auflagefläche zum Motorgehäuse ein radial vorstehender Fixier-Nocken 25 vorgesehen, der in eine korrespondierende radial eingeprägte Fixier-Vertiefung 11 im Motorgehäuse 1 eingreift.

FIG 3,4 bzw. FIG 5,6 zeigen zwei weitere Alternativen der tangentialen formschlüssigen Sicherung zwischen Aufnahmeblock 2 bzw. Feder-Schelle 3 einerseits und Motorgehäuse 1 andererseits, bei der gemäß FIG 3,4 ein radial nach innen eingedrückter Fixier-Nocken 33 in eine radial nach innen ragende geprägte Fixier-Vertiefung 12 des Motorgehäuses 1 und gemäß FIG 5,6 ein radial nach außenstehender Fixier-Nocken 13 des Motorgehäuses 1 in eine eingestanzte Fixier-Öffnung 34 der Feder-Schelle 3 eingreift.

Wie in FIG 1 anhand des Teilschnittbildes z.B. anhand eines einzigen eingeprägten Fixier-Nokkens 11 des Motorgehäuses 1 gezeigt, ist das Motorgehäuse im Bereich der Anlage des der Feder-Schelle 3 über den Umfang verteilt mit weiteren eingeprägten Fixier-Vertiefungen versehen, in die der Fixier-Nocken 25 des Aufhängeblocks 2 bei anderer Winkelstellung als die des gezeigten Winkel α seingreift. Entsprechend der anderen Winkelstellung ist dann auch die Feder-Schelle 3 um den entsprechenden tangentialen Winkel aus ihrer Lage gemäß FIG 1 verdreht anzunehmen.

## Patentansprüche

1. Motoraufhängung mittels eines das Motorgehäuse (1) umfassenden Bandes, das lösbar mit einer am Motorgehäuse (1) anliegenden Traverse (22) mit einer Aufhängungshülse (21) verbindbar und durch Festspannen zusammen mit der Traverse (22) an dem Motorgehäuse (1) fixierbar ist, **dadurch gekennzeichnet,** daß das Motorgehäuse (1) von einer Feder-Schelle (3) umfaßt ist, deren freie Schenkelenden (31;32) unter Federzug formschlüssig in die dadurch gegen das Motorgehäuse (1) festgespannte Traverse (22) eingreifen und die Traverse (22) bzw. die Feder-Schelle (3) mit zumindest einem radialen Fixier-Nocken (25 bzw.33) oder einer radialen Fixier-Vertiefung (34) sowie das Motorgehäuse (1) mit zumindest einer korrespondierenden radialen Fixier-Vertiefung (11 bzw.12) oder einem radialen Fixier-Nocken (13) versehen sind.

2. Motoraufhängung nach Anspruch 1, **gekennzeichnet durch** einen Federbügel (36) im Zuge der Feder-Schelle (3) gegenüber der Schenkelenden-Öffnung.

3. Motoraufhängung nach Anspruch 1 oder 2, **dadurch gekennzeichnet,** daß die Aufhängungshülse (21) und die Traverse (22) Teile eines einstückigen Aufnahmeblocks (2) in Form eines Spritzguß- bzw. Druckgußbauteils sind.

4. Motoraufhängung nach einem der Ansprüche 1-3, **dadurch gekennzeichnet,** daß die freien Schenkelenden (31;32) der Feder-Schelle (3) mit Klemmbügeln (311;321) versehen sind, die in korrespondierende Klemm-Nocken (23,24) am Aufnahmeblock (2) eingreifen.

5. Motoraufhängung nach Anspruch 4 , **dadurch gekennzeichnet,** daß die freien Schenkelenden (31,32) mit Ausklinkungen versehen sind, in die im Sinne einer axialen Lagefixierung zwischen der Traverse (22) und der Feder-Schelle (3) Streben (26,27) der Traverse (22) eingreifen.

6. Motoraufhängung nach zumindest einem der Ansprüche 1 bis 5, **dadurch gekennzeichnet,** daß im Sinne eines für verschiedene Aufhängungslagen einsetzbaren Universal-Motorgehäuses das Motorgehäuse (1) mit mehreren, durch Zahl und Position den unterschiedlichen Lagen der Traverse (22) entsprechenden Fixier-Vertiefungen bzw. Fixier-Nocken versehen ist.

7. Motoraufhängung nach zumindest einem der Ansprüche 5 oder 6, **dadurch gekennzeichnet,** daß die Fixier-Vertiefungen bzw. Fixier-Nocken in die Oberfläche des Motorgehäuses eingedrückt bzw. eingeprägt sind sowie die Fixier-Nocken bzw. Fixier-Öffnungen in die Feder-Schelle (3) eingeprägt bzw. eingestanzt sind.

## Claims

1.  An engine mounting having a band embracing the engine housing (1), which band is releasably connected to a tie-bar (22), resting against the engine housing (1) and having a mounting bush (21), and which band is able to be fixed to the engine housing (1) by clamping it with the tie-bar (22), characterised in that the engine housing (1) is embraced by a spring clip (3), the free leg ends (31,32) of which resiliently engage in a positive-locking manner with the tie-bar (22), clamped thereby against the engine housing (1), the tie-bar (22) or the spring clip (3) being provided with at least one radial fixing protrusion (25 or 33) or radial fixing recess (34) and the engine housing (1) being provided with at least one corresponding radial fixing recess (11 or 12) or radial fixing protrusion (13).

2.  An engine mounting according to claim 1, characterised by a spring band (36) in cooperation with the spring clip (3), opposite the opening of the leg ends.

3.  An engine mounting according to claim 1 or 2, characterised in that the mounting bush (21) and the tie-bar (22) are parts of a one-piece injection moulded or die cast block (2).

4.  An engine mounting according to any one of claims 1 to 3, characterised in that the free leg ends (31;32) of the spring clip (3) are provided with clamping brackets (311;321) which engage with corresponding clamping protrusions (23,34) on the block (2).

5.  An engine mounting according to claim 4, characterised in that the free leg ends (31,32) are provided with notches which are engaged by supports (26, 27) of the tie-bar (22) to axially fix the tie-bar (22) to the spring clip (3).

6.  An engine mounting according to at least any one of claims 1 to 5, characterised in that, in the capacity of a universal motor housing being able to be employed for various mounting positions, the motor housing (1) is provided with several fixing recesses or fixing protrusions corresponding to the various positions of the tie-bar (22) in number and position.

7.  An engine mounting according to at least one of claims 5 or 6, characterised in that the fixing recesses or fixing protrusions are pressed into or imprinted on the surface of the motor housing and the fixing protrusions or fixing openings are imprinted on or punched out of the spring clip (3).

## Revendications

1.  Suspension pour moteur, constituée d'une bande, qui entoure le carter (1) du moteur, qui peut être reliée de façon détachable à une traverse (22) située sur le carter (1) du moteur, au moyen d'une douille de suspension (21) et qui peut être fixée au carter (1) du moteur par serrage conjointement avec la traverse (22), caractérisée par le fait que le carter (1) du moteur est entouré par un collier formant ressort (3), dont les extrémités libres (31;32) des branches s'engagent selon une liaison par formes complémentaires, et sous l'effet d'une traction élastique, dans la traverse (22) serrée de ce fait contre le carter (1) du moteur, et la traverse (22) ou le collier formant ressort (3) est pourvu d'au moins un élément radial de fixation saillant (25 ou 33) ou d'un renforcement radial de fixation (34), et le carter (1) du moteur est pourvu d'au moins un renforcement radial de fixation correspondant (11 ou 12) ou d'un appendice radial de fixation saillant (13).

2.  Suspension pour moteur suivant la revendication 1, caractérisée par un étrier formant ressort (36) que comporte le collier formant ressort (3) et qui est disposé à l'opposé de l'ouverture des extrémités des branches.

3.  Suspension pour moteur suivant la revendication 1 ou 2, caractérisée par le fait que la douille de suspension (21) et la traverse (22) font partie d'un bloc de réception d'un seul tenant (2) se présentant sous la forme d'un composant moulé par injection ou coulé sous pression.

4.  Suspension pour moteur suivant l'une des revendications 1-3, caractérisée par le fait que les extrémités libres (31,32) des branches du collier formant ressort (3) comportent des étriers de serrage (311;321) qui s'engagent sur des éléments de blocage (23,24) saillants correspondants, prévus sur le bloc de réception (2).

5.  Suspension pour moteur suivant la revendication 4, caractérisée par le fait que les extrémités libres (31,32) des branches comportent des moulures, dans lesquelles des barrettes (26,27) de la traverse (22) s'engagent entre la traverse (22) et le collier formant ressort (30), de manière à réaliser un blocage axial en position.

6. Suspension pour moteur suivant au moins l'une des revendications 1 à 5, caractérisée par le fait qu'en vue de l'obtention d'un carter d'un moteur universel utilisable pour différentes positions de suspension, le carter (1) du moteur est pourvu de plusieurs renfoncements de fixation ou éléments saillants de fixation dont le nombre et la position correspondent aux différentes positions de la traverse (22).

7. Suspension pour moteur suivant au moins l'une des revendications 5 ou 6, caractérisée par le fait que les renfoncements de fixation ou les éléments de fixation saillants sont ménagés en renfoncements formés par matriçage dans la surface du carter du moteur et que les éléments de fixation saillants ou les ouvertures de fixation sont ménagés par matriçage ou découpage dans le collier formant ressort (3).

FIG 1

FIG 2

FIG 3

FIG 4

FIG 5

FIG 6